# EUROPÄISCHE PATENTSCHRIFT

(11) **EP 3 977 076 B1**
(45) Veröffentlichungstag und Bekanntmachung des Hinweises auf die Patenterteilung: **10.12.2025**
(21) Anmeldenummer: 20733344.4
(22) Anmeldetag: 28.05.2020
(51) Int. Cl.: G01J 5/00, G01J 5/0818, G01J 5/0875, G02B 6/36, G01J 5/04, G01J 5/02, G02B 6/10, G02B 6/42, G08B 17/12

(54) **LICHTLEITANORDNUNG, FUNKEN- UND/ODER FLAMMENDETEKTOR UND BRANDSCHUTZSYSTEM**
LIGHT GUIDING ARRANGEMENT, SPARK AND/OR FLAME DETECTOR AND FIRE PROTECTION SYSTEM
ARRANGEMENT DE GUIDAGE DE LUMIÈRE, DÉTECTEUR D'ÉTINCELLES ET/OU DE FLAMMES ET SYSTÈME DE PROTECTION INCENDIE

(30) Priorität: 28.05.2019 DE 102019114274
(43) Veröffentlichungstag der Anmeldung: 06.04.2022
(73) Patentinhaber: Minimax Viking Patent Management GmbH, 23840 Bad Oldesloe (DE)
(72) Erfinder: DITTMER, Hauke, 23840 Bad Oldesloe (DE); SIEMER, Dirk, 23840 Bad Oldesloe (DE); ZIEMS, Bernd, 23840 Bad Oldesloe (DE)
(74) Vertreter: Eisenführ Speiser
(86) Internationale Anmeldenummer: PCT/EP2020/064818
(87) Internationale Veröffentlichungsnummer: WO 2020/239898

(56) Entgegenhaltungen:
- CN-A- 1 112 026
- DE-A1- 102015 223 362
- DE-A1- 3 042 399
- DE-A1- 3 042 454
- DE-T2- 60 213 083
- JP-A- H10 106 317
- US-A1- 2007 223 000

## Beschreibung

Die vorliegende Erfindung betrifft eine Lichtleitanordnung zur Übertragung einer elektromagnetischen Strahlung, einen Funken- und/oder Flammendetektor, ein Brandschutzsystem und ein zugehöriges Verfahren.

Funken- und Flammendetektoren sind bekannt. Sie werden auch als Funkenmelder und Flammenmelder bezeichnet und sind häufig in Brandschutzsystemen eingesetzt, die Funken und/oder Flammen detektieren und vorzugsweise bei Detektion über eine zentrale Steuereinheit eine löschmittelausbringende Einrichtung und/oder eine Schutzvorrichtung ansteuern. Eine bekannte Möglichkeit zur Detektion von Funken bzw. Flammen ist es, von diesen erzeugte, charakteristische elektromagnetische Strahlung zu detektieren. Die von Funken emittierte Strahlung weist charakteristische Wellenlängen im Bereich von etwa 0,2 bis 2 Mikrometer auf, diejenige von Flammen mehrere Wellenlängen im Bereich von 0,2 bis 6 Mikrometer. Im Weiteren werden auch Glutnester, die eine charakteristische Strahlung von Funken und/oder Flammen aufweisen als Funken bezeichnet.

Problematisch ist, dass die zu überwachenden Einsatzbereiche, in denen die Funken bzw. Flammen zu überwachen sind, häufig sehr hohen Temperaturen von beispielsweise 450°C ausgesetzt sind, was außerhalb des Einsatztemperaturbereiches von typischen Detektoren liegt, der regelmäßig im Bereich von höchstens 125°C endet.

Beispielhafte Anwendungsbereiche für den Einsatz von Funken- und/oder Flammendetektoren sowie von Brandschutzsystemen, die derartig anspruchsvolle Umwelteinflüsse bereithalten, sind pneumatische Förderer in Materialtrocknern für z.B. Getreide oder Holzspäne, bei denen Fremdpartikel wie Steine Funkenschläge auslösen könnten. Natürlich sind auch andere vergleichbare Anwendungsbereiche vorstellbar, wie z. B. Trockenkammern /-öfen, in denen Materialien zu brennen beginnen könnten oder weitere Fertigungsprozesse oder Objekte bzw. Räume in denen Funken, Glutnester oder Flammen entstehen können. In diesem Zusammenhang werden Funken- und/oder Flammendetektoren synonym auch als Funken- und/oder Flammenmelder bezeichnet.

Das Deutsche Patent- und Markenamt hat in der Prioritätsanmeldung zu vorliegender Anmeldung folgenden Stand der Technik recherchiert: DE 30 42 399 A1, DE 30 42 454 A1, DE 20 2013 006 142 U1, DE 691 24 165 T2 und US 4,592,353 A.

US 2007/223000 A1 beschreibt einen optischen Sensor mit einem Körper aus Saphir. Ein Hohlraum in dem Saphirkörper definiert eine Oberfläche, die als Oberfläche eines Fabry-Perot-Resonators verwendet wird. Die Interferometrie wird verwendet, um Änderungen der Länge des Fabry-Perot-Resonators und damit Änderungen, beispielsweise der Temperatur oder des Drucks der Umgebung, in der sich der Sensor befindet, festzustellen.

DE 30 42 399 A1 umfasst eine Sensoranordnung zur Erfassung von physikalischen Vorgängen im Brennraum einer Brennkraftmaschine. Die Sensoranordnung weist dabei wenigstens einen, dem Brennraum zugewandten, in einem vorzugsweise zündkerzenartigen Schraubgehäuse angeordneten Lichtleiter auf. Erfindungsgemäß ist der Lichtleiter als Quarzglasstab ausgebildet, der brennraumseitig an einer Innenschulter des Gehäuses und auf der brennraumabgewandten Seite an einem in das Gehäuse angepassten Bordelteil abgestützt ist.

DE 30 42 454 A1 beschreibt eine Sensoranordnung zur Erfassung von physikalischen Vorgängen im Brennraum einer Brennkraftmaschine. Der Sensor ist vorzugsweise in einem zündkerzenartigen Schraubgehäuse angeordnet und weist einen dem Brennraum zugewandten Lichtleiter auf. Der Lichtleiter ist dabei als Quarzglasstab ausgebildet, der gleichachsig zu einem an der Brennraum abgewandten Seite des Sensors angeordneten eingeschmolzenen Fenster angeordnet ist. Der Sensor kann in vorteilhafter Weise zur Messung des Klopfens einer Brennkraftmaschine eingesetzt werden.

DE 602 13 083 T2 bezieht sich auf auch eine Vorrichtung zum Anordnen eines photoelektrischen Wandlers an einem Bauelement zur Verarbeitung elektrischer Signale.

DE 10 2015 223362 A1 betrifft ein explosionsgeschütztes Gehäuse für Mittel zum Senden bzw. Empfangen elektromagnetischer Strahlung. Das Gehäuse umfasst einen Gehäusekörper, der zur Aufnahme solcher Sende- und/oder Empfangsmittel eingerichtet ist, sowie ein Fensterelement mit einer ersten, dem Gehäuseinneren zugewandten Seite und einer gegenüberliegenden zweiten, dem Gehäuseinneren abgewandten Seite, wobei das Fensterelement gegenüber elektromagnetischer Strahlung durchlässig ist. Der Gehäusekörper weist auf der zweiten Seite des Fensterelements eine Bördelung auf, welche das Fensterelement in Richtung eines im Inneren des Gehäuses ausgebildeten Sitzes drückt, so dass das Gehäuse als druckfestes Gehäuse und/oder als staubdichtes Gehäuse ausgebildet ist.

CN 1 112 026 A beschreibt ein luftgekühltes Gehäuse für ein Lichttherapiegerät, umfassend einen mit dem Gehäuse integrierten Griff. An der Innenwand des Gehäuses sind gleichmäßig Stützpunkte für das Lichttherapiegerät vorgesehen, so dass zwischen der Innenwand des Gehäuses und der Außenwand des Lampenraums des Lichttherapiegeräts ein Zwischenraum und ein Kanal zur Luftzirkulation verbleiben. Die Außenwand des Lichtleiters weist eine doppelschichtige Hülsenstruktur auf. Am gehäusenahen Ende der Lichtquelle ist eine Abluftöffnung vorgesehen, an der ist ein elektrischer Abluftventilator angebracht. Am dem Abluftventilator gegenüberliegenden, entfernten Ende des Gehäuses ist eine Lufteinlassöffnung ausgebildet.

JP H10 106317 A beschreibt eine Sonnenlicht-Autoverfolgungsvorrichtung, umfassend einen Hauptsensor, der an einem Außenumfang eines Konzentrators angeordnet ist, einen Konzentrator-Innensensor, der im Inneren des Konzentrators angeordnet ist, wobei der Hauptsensor, der Konzentrator-Innensensor und ein Feineinstellungssensor zur Feinjustierung des Fokus zusammenwirken, wobei der Feineinstellungssensor aus einem Aufwärts-Feineinstellungssensor, einem Abwärts-Feineinstellungssensor und einem Stoppverfolgungs-Feineinstellungssensor besteht, wobei der Stoppverfolgungs-Feineinstellungssensor zwischen einem hitzebeständigen Lichtleiter für den Aufwärts-Feineinstellungssensor und einem hitzebeständigen Lichtleiter für den Abwärts-Feineinstellungssensor angeordnet ist und in einer Richtung senkrecht zur Vorrückrichtung der horizontalen Drehbewegung des Konzentrators positioniert ist, und wobei ein hitzebeständiges Lichtleiter-Abschirmrohr, das zur Lichtleitung zum Stoppverfolgungs-Feineinstellungssensor dient, mit einem Schlitz versehen ist.

Vor diesem Hintergrund war es eine Aufgabe, eine Lichtleitanordnung, einen Funken- und/oder Flammendetektor sowie Brandschutzsysteme und zugehörige Verfahren bereitzustellen, die ermöglichen, dass in anspruchsvollen Umwelteinflüssen entstehende Funken bzw. Flammen mit einer hohen Zuverlässigkeit detektierbar sind.

Erfindungsgemäß wird die Aufgabe durch eine Lichtleitanordnung zur Übertragung von elektromagnetischer Strahlung, insbesondere von Ultraviolett- und/oder Infrarotstrahlung, gemäss Anspruch 1 gelöst, wobei die Lichtleitanordnung ein Gehäuse und einen Lichtleitstab aufweist, wobei das Gehäuse eine Lichteintrittsöffnung und eine gegenüberliegende Lichtaustrittsöffnung aufweist, wobei der Lichtleitstab in dem Gehäuse zwischen der Lichteintrittsöffnung und der Lichtaustrittsöffnung angeordnet ist, wobei der Lichtleitstab auf wenigstens einer Seite in dem Gehäuse federnd gelagert ist, um unterschiedliche thermische Ausdehnungen zwischen dem Lichtleitstab und dem Gehäuse sowie Stöße des Lichtleitstabs aufzunehmen.

Ein Luftspalt ist zwischen Lichtleitstab und Gehäuse, insbesondere entlang der Axialrichtung des Lichtleitstabes, vorgesehen, wobei der Luftspalt besonders bevorzugt zwischen 0,2 mm und 5 mm beträgt. Insbesondere ist der Luftspalt umlaufend um den gesamten Lichtleitstab vorgesehen. Die Luft in dem Luftspalt unterstützt die Kühlung der Lichtleitanordnung.

Die Lichtleitanordnung weist ferner eine Lufteinleiteinrichtung auf, die dazu eingerichtet ist, Luft, insbesondere Druckluft, in den Luftspalt zwischen Lichtleitstab und Gehäuse einzuleiten.

Somit wird eine Lichtleitanordnung bereitgestellt, die einen gefedert gelagerten Lichtleitstab umfasst, so dass Stöße und eine unterschiedliche thermische Ausdehnung von Lichtleitstab und Gehäuse ermöglicht ist. Dadurch kann ein Betrieb auch bei signifikant unterschiedlichen Temperaturen zwischen Lichteintrittsöffnung und Lichtaustrittsöffnung gewährleistet bleiben, ohne dass es zu Spannungen in der Lichtleitanordnung kommt. Üblicherweise ist der Lichtleiter bruchempfindlich und wird durch die erfindungsgemäße gefederte Lagerung geschützt.

Die gefederte oder schwingende Lagerung ist besonders deshalb von Vorteil, da der Lichtleiter bei Kontakt mit dem Gehäuse, insbesondere an einer Zylinderfläche des Lichtleiters, seinen Brechungsindex verändert und die Lichtleitung beeinträchtigen würde.

Eine Seite des Gehäuses bezeichnet einen an einer beliebigen Stelle angeordneten, beliebig geformten Abschnitt des Gehäuses wie eine Fläche des Gehäuses. So umfassen beispielsweise bei einem zylinderförmigen Gehäuse die Seiten sowohl die Stirn- als auch die Mantelflächen. In diesem Fall kann die federnde Lagerung also in Axial- und/oder in Radialrichtung des zylinderförmigen Gehäuses erfolgen. Alternativen, wie beispielsweise eine rechteckige Gehäuseform, sind vorstellbar.

Vorzugsweise ist der Lichtleiter wenigstens teilweise verspiegelt. Beispielsweise ist der Lichtleiter, wenn dieser zylinderförmig ist, an seiner Zylinderfläche verspiegelt. Damit können die Auswirkungen eines Kontaktes zwischen Lichtleiter und Gehäuse reduziert werden.

Der Lichtleitstab ist vorzugsweise starr und weist einen Durchmesser von wenigstens 5 mm auf. Vorzugsweise beträgt der Durchmesser des Lichtleitstabes höchstens 25 mm. Vorzugsweise ist der Lichtleitstab zylinderförmig, wobei der Lichtleitstab Decken- bzw. Bodenflächen aufweist, die der Lichteintrittsöffnung bzw. der Lichtaustrittsöffnung zugewandt sind.

Durch den Lichtleitstab wird eine Entkopplung, insbesondere eine thermische Entkopplung zwischen der Seite der Lichteintrittsöffnung und der Lichtaustrittsöffnung gewährleistet.

Vorzugsweise ist die Seite des Gehäuses mit der Lichteintrittsöffnung in einem zu überwachenden Schutzbereich, der auch als Raum und/oder als Überwachungsbereich bezeichnet wird, angeordnet mit Umgebungstemperaturen von über 80°C, besonders bevorzugt von über 125°C.

Die Länge des Lichtleitstabes beträgt vorzugsweise zwischen 75 mm und 1500 mm, wobei die Länge besonders bevorzugt aufgrund der erforderlichen bzw. gewünschten Temperaturdifferenz zwischen dem an die Lichteintrittsöffnung angrenzenden Überwachungsbereich und einem Betriebsbereich eines an der Lichtaustrittsöffnung angeordneten Sensors gewählt ist. Damit ist ein sicherer Betrieb eines Funken- bzw. Flammenmelders möglich, insbesondere ist die Einhaltung des Einsatztemperaturbereiches unterhalb des vorgegeben Grenzwertes für den Sensor und/oder die Elektronik des Funken- und/oder Flammenmelders gewährleistet.

Die Verwendung eines Lichtleitstabes anstelle eines simplen Lichtleiters, beispielsweise einer Anordnung aus Glasfasern wie einem Glasfaserbündel, ermöglicht, dass ein Sensor, der im Bereich der Lichtaustrittsöffnung anordenbar ist, einen möglichst breiten Sichtbereich auf der Seite der Lichteintrittsöffnung besitzt. Hierzu ist vorzugsweise die gesamte Sensorfläche auf einer Deckfläche des Lichtleiters anordenbar.

Erfindungsgemäss ist eine, federnde Lagerung als Lagerung in Axialrichtung des Lichtleitstabes auf der der Lichteintrittsöffnung gegenüberliegenden Seite ausgebildet. Durch die Länge ist insbesondere die Ausdehnung in Axialrichtung signifikant und durch die federnde Lagerung aufgenommen.

Vorzugsweise weist die Lichtleitanordnung ferner eine vor dem Lichtleitstab an der Lichteintrittsöffnung angeordnete Schutzoptik auf.

Die dem zu überwachenden Schutzbereich, zugewandte Oberfläche der Schutzoptik bildet die Ebene des Eintritts der elektromagnetischen Strahlung und bildet den Erfassungsort der für Funken und/oder Flammen charakteristischen elektromagnetischen Strahlung.

Die Schutzoptik verhindert, dass Partikel oder andere Objekte, die sich in dem der Lichteintrittsöffnung zugewandten Raum befinden, den Lichtleitstab beschädigen. Vorzugsweise weist das Gehäuse im Bereich der Lichteintrittsöffnung ein Gewinde auf und die Schutzoptik ist zum Aufschrauben auf das Gehäuse ausgebildet.

Hierdurch kann die Haltbarkeit der Lichtleitanordnung verbessert werden, da die Schutzoptik, beispielsweise bei Verschmutzung, mit einfachen Mitteln gewartet werden kann, ohne dass die gesamte Lichtleitanordnung auszutauschen ist. Ferner ermöglicht das Gewinde vorzugsweise den Anpressdruck auf die federnde Lagerung anzupassen.

Vorzugsweise weist das Gehäuse im Bereich der Lichteintrittsöffnung ein Fixierungselement für die Schutzoptik auf. Das Fixierungselement ist insbesondere als eine Bördelung ausgebildet, wobei auch andere geeignete Fixierungselemente vorstellbar sind.

Zusätzlich die Lichtleitanordnung eine elastische Lagerung in Radialrichtung um den Lichtleitstab auf.

Die Bördelung oder ein anderes geeignetes Fixierungselement des Gehäuses für die Schutzoptik ermöglicht vorzugsweise einen festen Anschlag in Axialrichtung, der zur Definition der räumlichen Position der Lagerung herangezogen wird. Erfindungsgemäss ist mehr als eine Lagerung vorgesehen. Das Fixierungselement und/oder Lagerung in Radialrichtung ermöglichen, dass der Lichtleitstab in Axialrichtung und/oder in Radialrichtung federnd gelagert ist.

Vorzugsweise weist die Schutzoptik ein Fensterelement auf bzw. besteht daraus. Das Fensterelement hat zwei Seiten, eine dem Lichtleitstab bzw. dem Inneren des Gehäuses zugewandte Seite und eine gegenüberliegende, dem zu überwachenden Schutzbereich zugewandte Seite. Besonders bevorzugt ist das Fensterelement für elektromagnetische Strahlung wenigstens im Wellenlängenbereich 0,2 Mikrometer bis 6 Mikrometer durchlässig

Vorzugsweise ist ein Toleranzring zwischen Schutzoptik und Gehäuse bzw. Lichtleitstab frei gelagert.

Vorzugsweise weist das Gehäuse auf seiner Außenseite in Axialrichtung Kühlelemente, insbesondere Kühlrippen, auf.

Die auf der Außenseite angeordneten Kühlelemente verbessern die Wärmeabfuhr von dem Gehäuse und ermöglichen so, dass die Länge der Lichtleitanordnung, insbesondere auch des Lichtleitstabes möglichst gering ist.

Vorzugsweise weist der Lichtleitstab Saphir auf bzw. besteht daraus und/oder das Gehäuse weist Edelstahl auf bzw. besteht daraus.

Saphir ermöglicht besonders gute Lichtleiteigenschaften über einen breiten Wellenlängenbereich, so dass der Einsatz von Saphir in der Lichtleitanordnung besonders vorteilhaft ist. Edelstahl hingegen zeigt eine gute Temperaturbeständigkeit, so dass auch ein Einsatz in anspruchsvollen, insbesondere sehr heißen, Umgebungen möglich ist. In anderen Anwendungen sind selbstverständlich auch andere geeignete Materialien einsetzbar.

Vorzugsweise ist im Bereich der Lichtaustrittsöffnung eine Aufnahme zur Aufnahme wenigstens eines Teils eines Sensorkopfes ausgebildet. Der Sensorkopf kann demnach an den Lichtleitstab angekoppelt werden und das Licht dadurch beispielsweise zu einem Sensor leiten. Besonders bevorzugt weist der in der Aufnahme aufzunehmende Sensorkopf dafür auf einer Stirnseite, die in der in der Aufnahme aufgenommenen Position an dem Lichtleitstab angeordnet ist, wenigstens einen Sensor auf.

Besonders bevorzugt ist die Kopplung zwischen Sensorkopf und Aufnahme reversibel, so dass die Lichtleitanordnung bzw. der Sensorkopf im Bedarfsfall austauschbar sind. Die Kombination aus Sensorkopf und Lichtleitanordnung kann demnach einen Funken- und/oder Flammenmelder bilden.

Alternativ oder zusätzlich kann ein oder mehrere Sensoren, beispielsweise zur Detektion elektromagnetischer Strahlung, die durch den Lichtleitstab geleitet wurde, direkt an dem Lichtleitstab auf Seite der Lichtaustrittsöffnung montiert werden.

Vorzugsweise ist die Lichtleitanordnung zur Kopplung von optischer Strahlung und Elektronik bzw. Sensorik ausgebildet.

Die optische Strahlung wird demnach durch die Sensoren detektiert, muss also über den Lichtleiter angekoppelt werden. Vorzugsweise werden jedoch die negativen Umwelteinflüsse, wie Temperatur und auch elektromagnetische Störstrahlung entkoppelt.

Mit Entkopplung wird vorzugsweise die räumliche Distanz und thermische Entkopplung des Ortes, an dem die charakteristische Strahlung entsteht, von dem Ort, an dem die entstandene Strahlung detektiert wird, bezeichnet. Die Entkopplung ist insbesondere keine vollständige Entkopplung, sondern eine hinreichende Reduktion der gegenseitigen Beeinflussung, dass die Funktion der die Strahlung detektierenden Sensorik durch die Umgebung des Überwachungsbereiches nicht beeinträchtigt wird.

Vorzugsweise ist die Lichtleitanordnung zum Einsatz in Bereichen mit anspruchsvollen Umwelteinflüssen, insbesondere mit wenigstens einem aus hohen Temperaturen, hohen Spannungen, starker elektromagnetischer Störstrahlung wie auch Radioaktivität, aggressiver Atmosphären wie Säuren und Basen, eingeengter Platzverhältnisse und explosiven Atmosphären ausgebildet.

In derartigen Bereichen, die anspruchsvolle Umwelteinflüsse zeigen, ist es von besonderem Vorteil, dass die Lichtleitanordnung eine Entkopplung der entstehenden Strahlung von der Detektion der Strahlung ermöglicht. Durch die Trennung beziehungsweise Entkopplung kann der Sensor vor den Umwelteinflüssen geschützt werden und zuverlässig arbeiten, ohne dass eine komplizierte Ausgestaltung des Sensors nötig ist.

Vorzugsweise ist die Lichtleitanordnung zur Leitung von Licht im Wellenlängenbereich von 0,2 bis 6 Mikrometer, insbesondere von etwa 2,4 Mikrometer, und bevorzugt zur Detektion von Funken und/oder Flammen, ausgebildet.

Der Bereich der Funken- und/oder Flammendetektion ist sensibel, da besonders mit der Detektion von Funken ein entstehender Brand so frühzeitig erkannt werden kann, dass die Auswirkungen minimiert werden können.

Erfindungsgemäß wird ferner ein Funken- und/oder Flammendetektor, insbesondere zum Einsatz mit Brandmelder- und/oder Löschsteuerzentralen, mit einer erfindungsgemäßen Lichtleitanordnung und einem Sensorkopf vorgeschlagen, wobei der Sensorkopf dazu eingerichtet ist, mit der Lichtaustrittsöffnung der Lichtleitanordnung gekoppelt zu werden.

Vorzugsweise ist der Sensorkopf hierfür zur Aufnahme in der Aufnahme des Gehäuses der Lichtleitanordnung ausgebildet, alternativ kann auch auf der Seite des Sensorkopfes eine geeignete Aufnahme zur Aufnahme der Lichtleitanordnung ausgeführt sein.

Der Sensorkopf weist vorzugsweise je nach Einsatzgebiet unterschiedliche Sensorik auf, die im Montagezustand, in dem sich der Sensorkopf mit der Aufnahme und damit mit der Lichtleitanordnung gekoppelt befindet, derart an dem Lichtleitstab angeordnet sind, dass die Übertragung von elektromagnetischer Strahlung möglich ist. Hierbei ist ein direkter Kontakt genauso möglich wie ein dazwischenliegender Abstand, so lange die Kopplung der elektromagnetischen Strahlung aus der Lichtaustrittsöffnung zu der Sensorik gewährleistet ist.

Vorzugsweise ist der Sensorkopf daher zur Detektion von aus der Lichtaustrittsöffnung austretende, für Funken bzw. für Flammen charakteristische Strahlung, ausgebildet.

Der erfindungsgemäße Funken- und/oder Flammendetektor kann vorzugsweise mit einer beliebigen der bezüglich der Lichtleitanordnung als bevorzugt beschriebenen Ausführungsformen kombiniert werden.

Erfindungsgemäß wird ferner ein Brandschutzsystem vorgeschlagen, umfassend einen erfindungsgemäßen Funken- und/oder Flammendetektor und eine Auswerteeinheit. Die Auswerteeinheit ist besonders bevorzugt als Teil einer Brandmelder- und/oder Löschsteuerzentrale implementiert.

Alternativ sind auch dedizierte und/oder in den Funken- und/oder Flammendetektor integrierte Auswerteeinheiten vorstellbar. In diesen Fällen sind die Auswerteeinheiten vorzugsweise dazu eingerichtet, die Signale des Sensors auszuwerten und an eine übergeordnete Einheit, beispielsweise eine Steuereinheit einer Zentrale, weiterzuleiten.

Zur Verbindung des Funken- und/oder Flammendetektors mit der Auswerteeinheit ist vorzugsweise ein Anschlusskabel vorgesehen. Alternativ kann die Anbindung und Signalübertragung auch drahtlos erfolgen.

In einer vorteilhaften Ausführung des Brandschutzsystems weist dieses ferner eine löschmittelausbringende Einheit und/oder eine Schutzvorrichtung auf, wobei diese löschmittelausbringende Einrichtung durch die Auswerteeinheit und/oder eine zentrale Steuereinheit angesteuert wird.

Die Schutzvorrichtung kann jede beliebige Vorrichtung sein die im Fall der Detektion von Funken oder Flammen angesteuert wird, um die Schadensauswirkung zu begrenzen. Beispiele für Schutzvorrichtungen sind Materialausbringungsklappen oder Stromabschaltungsvorrichtungen.

In einer bevorzugten Ausgestaltung ist das Brandschutzsystem als Funkenlöschanlage ausgeführt und die Auswerteeinheit und/oder eine zentrale Steuereinheit ist als Teil einer Funkenmelderzentrale ausgebildet.

In einem weiteren Aspekt wird ein Verfahren zur thermischen Entkopplung mindestens eines Sensors eines Funken- und/oder Flammendetektors vom Erfassungsort der für Funken oder Flammen charakteristischen elektromagnetischen Strahlung vorgeschlagen. Das Verfahren umfasst die Schritte: a) Bereitstellen einer Lichtleitanordnung zur Übertragung von elektromagnetischer Strahlung, insbesondere von Ultraviolett- und/oder Infrarotstrahlung, wobei die Lichtleitanordnung ein Gehäuse und einen Lichtleitstab aufweist, wobei das Gehäuse eine Lichteintrittsöffnung und eine gegenüberliegende Lichtaustrittsöffnung aufweist, wobei der Lichtleitstab in dem Gehäuse zwischen der Lichteintrittsöffnung und der Lichtaustrittsöffnung angeordnet ist, b) Leiten von elektromagnetischer Strahlung mittels des Lichtleitstabes von der Lichteintrittsöffnung zu der Lichtaustrittsöffnung, c) Detektieren der elektromagnetischen Strahlung durch den mindestens einen Sensor nach Austritt der elektromagnetischen Strahlung aus der Lichtaustrittsöffnung.

Das erfindungsgemäße Verfahren kann analog mit sämtlichen bevorzugten Ausgestaltungen insbesondere des beschriebenen Lichtleitanordnung kombiniert werden.

Erfindungsmeäss ist zwischen Lichtleitstab und Gehäuse, insbesondere in Axialrichtung des Lichtleitstabs, ein Luftspalt ausgebildet, wobei der Luftspalt vorzugsweise zwischen 0,2 mm und 5 mm beträgt, wobei das Verfahren den nachfolgenden Schritt aufweist: d) Beeinflussen, insbesondere mittels einer Lufteinleiteinrichtung, der Luft in dem Luftspalt.

Durch die Beeinflussung der Luft in dem Luftspalt kann insbesondere die Temperaturdifferenz zwischen Lichteintrittsöffnung und Lichtaustrittsöffnung durch Abfuhr von Wärme vergrößert werden.

Weitere Vorteile und besondere Ausgestaltungen werden nachfolgend mit Verweis auf die beigefügten Figuren beschrieben. Hierbei zeigen:
Fig. 1 schematisch und exemplarisch eine Lichtleitanordnung im Querschnitt;
Fig. 2 schematisch und exemplarisch eine Draufsicht auf einen Sensorkopf zur Funkendetektion,
Fig. 3 schematisch und exemplarisch eine Draufsicht auf einen Sensorkopf zur Flammendetektion,
Fig. 4 schematisch und exemplarisch einen Funken- bzw. Flammendetektor in mehreren Ansichten,
Fig. 5 schematisch und exemplarisch eine Ausführung eines Gehäuses der Lichtleitanordnung,
Fig. 6 schematisch und exemplarisch ein Brandschutzsystem und
Fig. 7 schematisch und exemplarisch ein Flussdiagramm eines Verfahrens.

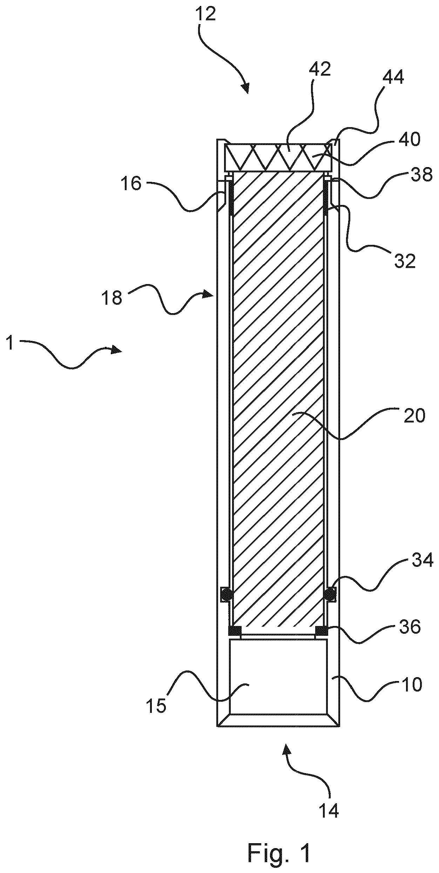

Figur 1 zeigt schematisch und exemplarisch eine Lichtleitanordnung 1 im Querschnitt. Die Lichtleitanordnung 1 ist dazu eingerichtet, Licht, insbesondere Ultraviolett-, Infrarot- und/oder Temperaturstrahlung, von einer Lichteintrittsöffnung 12 zu einer Lichtaustrittsöffnung 14 zu leiten.

Die Lichtleitanordnung 1 umfasst ein Gehäuse 10, in dessen Inneren ein Lichtleitstab 20 federnd gelagert ist. Zur Lagerung des Lichtleitstabs 20 weist die Lichtleitanordnung 1 ein Federelement 32, ein Federelement 34 sowie ein Federelement 36 auf. Hierbei sollte beachtet werden, dass die beispielhaft gezeigten Federelemente 32, 34, 36 auch anders ausgebildet sein können.

Die Federelemente 32, 34, und 36 ermöglichen, dass sich der Lichtleitstab 20 relativ zu dem Gehäuse 10 ausdehnen kann, ohne dass es zu Spannungen kommen kann. Darüber hinaus ist der üblicherweise hochempfindliche Lichtleiter des Lichtleitstabes 20 durch die Lagerung geschützt. So ist bekannt, dass sich unterschiedliche Materialien, vorliegend beispielsweise der Lichtleitstab 20 und das Gehäuse 10, bei Erwärmung unterschiedlich stark ausweiten, was zu Spannungen führen kann. Dieser Effekt kann durch die federnde Lagerung kompensiert werden.

Zwischen Lichtleitstab 20 und Gehäuse 10 ist vorzugsweise ein Luftspalt von 0,2 mm bis 5 mm vorgesehen. In den Luftspalt kann mittels einer nicht gezeigten Lufteinleiteinrichtung Luft, insbesondere Druckluft, eingeleitet werden. Die Druckluft verbessert eine Kühlung des Lichtleitstabes 20 bzw. der Lichtleitanordnung 1.

Das Federelement 32 ist im Bereich der Lichteintrittsöffnung 12 angeordnet und wird beispielsweise mittels eines Toleranzrings 38 in Position gehalten. Der Toleranzring 38 wiederum wird über eine Fixierungseinrichtung, beispielsweise ein Gewinde 16, mit dem eine Schutzoptik 40, fixiert wird, befestigt. Die Schutzoptik 40 weist ein Fensterelement 42, das für entsprechende Wellenlängen optisch transparent ist und beispielsweise als Linse oder Scheibe ausgebildet ist, auf.

Die Schutzoptik 40 ist demnach reversibel montierbar, insbesondere abschraubbar, und kann so bei Verunreinigungen oder Beschädigungen einfach gewechselt werden. Das Fensterelement 42 wird in diesem Beispiel mit einer Bördelung 44 der Schutzoptik 40 gehalten.

Das Federelement 34 ist in einer Nut aufgenommen, sodass es eine federnde Lagerung des Lichtleitstabes 20 in radialer Richtung ermöglicht. Mittels der Nut ist die Position des Federelementes 34 in axialer Richtung entlang des Lichtleitstabes 20 festgelegt. Schließlich ist das Federelement 36 auf der Seite der Lichtaustrittsöffnung 14 angeordnet und lagert den Lichtleitstab 20 in axialer Richtung federnd.

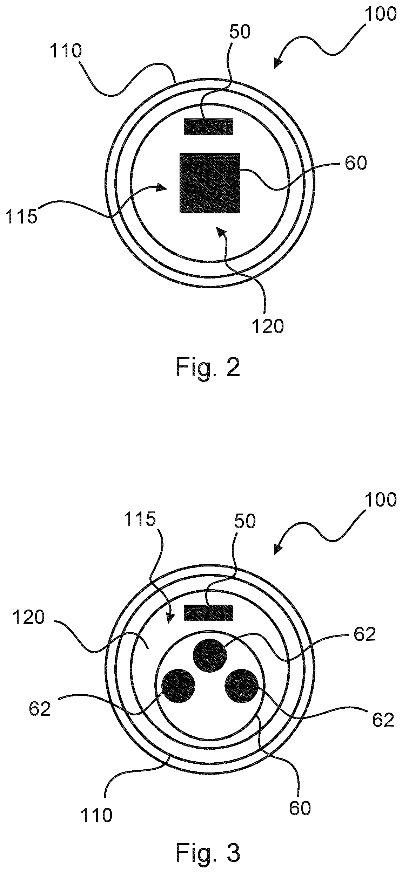

Auf der Seite der Lichtaustrittsöffnung 14 befindet sich eine Aufnahme 15 zur Aufnahme eines Sensorkopfes, insbesondere zur reversiblen Aufnahme eines Sensorkopfes, beispielsweise eines Flammen- und/oder Funkendetektors, wie später mit Verweis auf die Figuren 2 bis 4 im Detail beschrieben wird. In Verbindung mit einem Sensorkopf bildet die Lichtleitanordnung 1 einen Funken- und/oder Flammendetektor.

Auf der Außenseite des Gehäuses 10 ist bzw. sind vorzugsweise ein oder mehrere Kühlelemente 18 angeordnet. Die Kühlelemente 18 verbessern einen Wärmeabtransport von dem Gehäuse 10.

Die erfindungsgemäße Lichtleitanordnung 1 ermöglicht die Detektion von Infrarotstrahlung in einem Anwendungsbereich bis beispielsweise 450 °C, wobei über den Verlauf des der Lichtleitanordnung 1 in Axialrichtung eine Abkühlung auf eine maximale Einsatztemperatur eines in der Aufnahme 15 aufgenommenen Sensorkopfes erreicht wird.

In dem Beispiel, indem es sich bei einem Sensor um ein Siliziumelement handelt, das höchstens 100 °C Temperatur verträgt, erfolgt beispielsweise eine Abkühlung von 450 °C um ΔT gleich 350 K. Hierbei ergibt sich die Länge des Lichtleitstabes 20 aus der geforderten Abkühlung, was bedeutet, dass bei geringeren zu erzielenden Temperaturunterschieden kürzere Lichtleitstäbe 20 möglich sind.

Auch die Wärmeleitfähigkeit des Lichtleitstabes 20 und des umschließenden Gehäuses 10 haben einen Einfluss auf die minimale Länge. Je geringer die Wärmeleitfähigkeit ist, desto kürzer kann der Lichtleitstab 20 sein. Auch wird die Abkühlung des Lichtleitstabes 20 durch das Gehäuse 10, insbesondere durch auf der Oberfläche angeordnete Kühlelemente 18, sowie die Umgebungsbedingungen wie ruhende Luft, bewegte Luft und die Temperatur in diesem Umgebungsbereich, bestimmt.

Die nachfolgende Tabelle gibt einige Beispiele geeigneter Materialien für Lichtleiter als Lichtleitstab 20, als Gehäuse 10 oder als Sensor sowie deren Einsatzbereiche wieder. Natürlich sind auch weitere als Lichtleiter, als Gehäuse und als Sensoren geeignete Materialien möglich:

| Material | Verwendung | Wärmeleitfähigkeit (W/(m*K)) | Ausdehnung skoeffizient | Wellenlängenbereich (Transmission >50%) (nm) | Einsatztem peraturbereich (°C) |
|---|---|---|---|---|---|
| Saphir | Lichtleiter | 40 @ 25°C | 5,6*10⁻⁶/K | 300...5500 | >1000 |
| | | 12 @ 400°C | | | |
| Borosilicatglas | Lichtleiter | 1,2 | 3,3*10⁻⁶/K | 350...2500 | 500 |
| Quarzglas | Lichtleiter | 1,38 | 0,54*10⁻⁶/K | 170...3500 | 1000 |
| | | | | | |
| Edelstahl | Gehäuse | 16 | 16*10⁻⁶/K | - | 450...850 |
| Titan | Gehäuse | 22 | 8,6*10⁻⁶/K | - | 550 |
| Aluminium | Gehäuse | 220 | 23,8*10⁻⁶/K | - | 250 |
| Messing | Gehäuse | 123 | 21*10⁻⁶/K | - | 250 |
| | | | | | |
| Siliziumel ement | Detektor | - | - | 220...1100 | -40...100 |
| PbS | Detektor | - | - | 1000...3000 | -40...65 |
| PbSe | Detektor | - | - | 1000...4700 | -40... 85 |
| InGaAs | Detektor | - | - | 900... 1700 | -40... 85 |
| Pyrodetektor | Detektor | - | - | 200...25000 | -40... 85 |
| UV-Sensor | Detektor | - | - | 180...280 | -40...125 |

Zur thermischen Entkopplung sind Materialien mit geringer Wärmeleitfähigkeit besser geeignet. Beispielsweise ist Saphir als Material des Lichtleitstabes 20 nur für eine Temperaturdifferenz ΔT von ca. 200 K bei einer Länge von 10 cm und einem Durchmesser von 20 mm geeignet. Hierbei ist eine Edelstahlummantelung als Gehäuse 10 und ruhender Luft angenommen. Für Hochtemperatur Anwendungen bis zu einer Temperaturdifferenz ΔT von 350 K wird vorzugsweise Borosilicatglas oder Quarzglas verwendet.

Für die Entkopplung breitbandiger Wellenlängen, beispielsweise bei der Flammendetektion mit Pyrodetektoren, wird vorzugsweise Saphir als Material des Lichtleitstabes 20 eingesetzt.

Durch gezielte Einleitung von Luft, beispielsweise einer Einspeisung von Druckluft, in den Luftspalt zwischen Lichtleitstab 20 und Gehäuse 10 kann die Abkühlung verbessert werden. Vorzugsweise wird hierbei kalte Luft in der Nähe der Aufnahme 15, d.h. in Nähe des Detektors, eingeleitet und am Heißbereich, d.h. im Bereich der Lichteintrittsöffnung 12, ausgeleitet.

Der Lichtleitstab 20 ist, wie bereits erwähnt, schwingend gelagert, da er bei einem Kontakt mit dem Gehäuse 10 an einer Zylinderfläche des beispielsweise zylinderförmig ausgeführten Lichtleitstabes 20 seinen Brechungsindex verändern würde und damit die Lichtleitung beeinträchtigt wäre. Auch wäre alternativ eine Verspiegelung der Zylinderfläche denkbar, die jedoch eine aufwändigere Realisierung erfordert. Auch ist die schwingende Lagerung notwendig, um den bruchempfindlichen Lichtleitstab 20 zu schützen.

In einem ganz konkreten Ausführungsbeispiel ist der Lichtleitstab 20 zwischen 75 mm und 1500 mm lang und weist 5 mm bis 25 mm Durchmesser auf. Die größeren Durchmesser, insbesondere von 10 mm bis 25 mm, schließen besonders den Fall ein, in dem eine Optiküberwachung vorgesehen ist, vgl. Fig. 2 und 3.

Es ist bekannt, dass beispielsweise bei pneumatischen Förderern für Materialien wie Mehl oder Späne Fremdpartikel wie Steine zur Erzeugung von Funken führen können.

Die vorliegende Erfindung stellt die Lichtleitanordnung 1 bereit, die in einem Funkenmelder und/oder Flammenmelder verwendbar ist.

Verglichen mit Quarz hat Saphir als Material des Lichtleitstabes 20 eine größere Transmission, muss aber besser gegen Vibrationen geschützt werden. Die Toleranzringe 38 können hierfür beispielsweise mit einer ziehharmonikaartigen Form gebildet sein. Aufgrund der hohen auftretenden Temperaturen sind üblicherweise keine Federelemente bzw. Toleranzringe aus Gummimaterialien möglich.

Im Unterschied zu bekannten Lichtleitanordnungen ist insbesondere die Fläche für Sensoren, die im Bereich der Lichtaustrittsöffnung 14 zur Verfügung steht, groß genug um den oder die Sensoren vollständig flächig aufzunehmen.

Bei der in Fig. 1 gezeigten Lichtleitanordnung 1 nimmt die federnde Lagerung die unterschiedlichen Ausdehnungen sowie die Stöße auf.

Fig. 2 zeigt schematisch und exemplarisch eine Draufsicht auf einen Sensorkopf 100, der zur Aufnahme in der in Fig. 1 gezeigten Aufnahme 15 ausgebildet ist. Die gezeigte Fläche ist vorgesehen, in einer Montageposition an der Lichtaustrittsöffnung 14 angeordnet zu sein, das heißt mit dieser in Kontakt oder in der Nähe davon angeordnet zu sein. Ein Einführbereich 115 ist hierbei zur Anordnung innerhalb der Aufnahme 15 ausgebildet.

Zu sehen sind ein erster Sensor 50 und ein zweiter Sensor 60, die in der Montageposition mit dem Lichtleitstab 20 gekoppelt sind. Der erste Sensor 50 kann beispielsweise ein Sensor zur Optiküberwachung sein, der dazu ausgerichtet ist, zu überwachen, ob die Sichtfähigkeit durch den Lichtleitstab 20 gewährleistet ist.

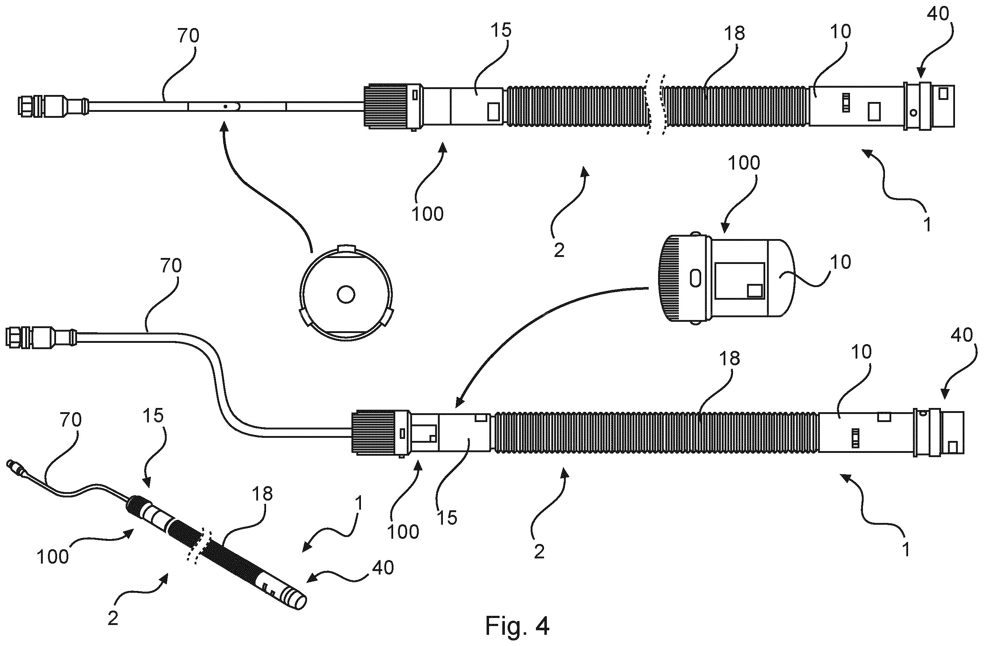

Der zweite Sensor 60 kann der Sensor sein, der letztendlich den Funken und/oder die Flamme detektiert. Es sollte beachtet werden, dass der Durchmesser des Lichtleitstabes 20 geringer ausfallen kann, wenn auf den ersten Sensor 50 verzichtet wird. Die Anordnung von sowohl dem ersten Sensor 50 als auch dem zweiten Sensor 60 verbessert die Zuverlässigkeit eines Funken- und/oder Flammendetektors 2, der vollständig in Fig. 4 gezeigt ist.

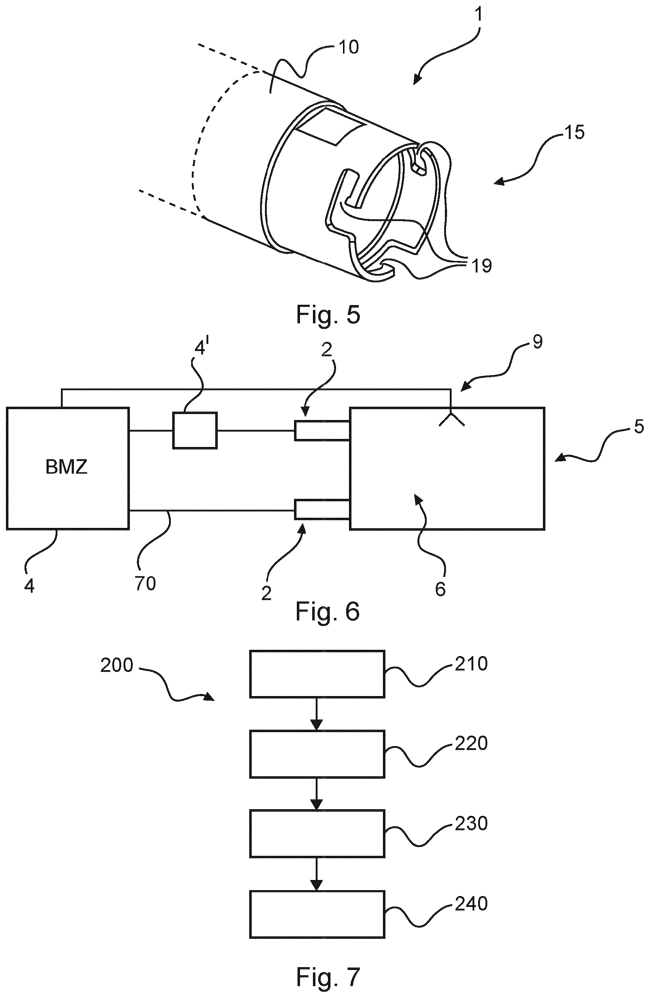

Der Sensorkopf 100 weist ferner eine nicht weiter dargestellte Elektronik 120 auf. Im einfachsten Fall ist die Elektronik 120 gar keine Elektronik im eigentlichen Sinn, sondern lediglich dazu eingerichtet, Signale der Sensoren 50, 60 an eine Auswerteelektronik, beispielsweise eine Brandmelder- und/oder Löschsteuerzentrale, vgl. Fig. 6, weiterzuleiten. Alternativ kann die Daten- bzw. Signalverarbeitung teilweise oder vollständig auch in dem Sensorkopf 100 ausgeführt werden.

Bei der Ausführung der Fig. 2 handelt es sich beispielsweise um einen Sensorkopf 100 eines Funkenmelders, da der zweite Sensor 60 als ein einziger Sensor zur Detektion einer bestimmten, für Funken charakteristischen Wellenlänge ausgebildet ist.

Fig. 3 zeigt schematisch und exemplarisch eine Draufsicht auf einen weiteren Sensorkopf 100. In diesem Beispiel weist der zweite Sensor 60 drei schmalbandige Sensorelemente 62 auf, die vorzugsweise drei unterschiedliche Wellenlängen der optischen Strahlung erfassen. Diese Ausführung ist vorzugsweise für einen Flammenmelder ausgebildet.

Der Sensorkopf 100 weist ein Gehäuse 110 auf, das Mittel umfasst, den Sensorkopf 100 in der Aufnahme 15 zu montieren. Beispielsweise kann die Verbindung durch Formpassung, in Form eines Bajonettverschlusses, vgl. Fig. 5, oder anderer Verbindungsarten ausgeführt sein.

Es sollte beachtet werden, dass der Sensorkopf 100 in die Aufnahme 15 vorzugsweise eingeschraubt wird. So ist es möglich, die erfindungsgemäße Lichtleitanordnung 1 sowohl als Funkenmelder als auch als Flammenmelder sowie in einer weiteren Ausführung auch als kombinierter Funken- und Flammenmelder auszuführen. Hierzu kann beispielsweise ein Gewinde in der Aufnahme 15 vorgesehen sein und das Gehäuse 110 ein korrespondierendes Gewinde aufweisen. Auch andere Arten der Fixierung sind selbstverständlich vorstellbar.

Fig. 4 zeigt schematisch und exemplarisch verschiedene Ansichten eines Funken- und/oder Flammendetektors 2, der eine Lichtleitanordnung 1 und einen in der Aufnahme 15 aufgenommenen Sensorkopf 100 zeigt. Ein Anschlusskabel 70, das flexibel ausgeführt ist, ermöglicht die Übertragung von Daten des Sensorkopfes 100 an eine Auswerteeinrichtung, insbesondere eine Brandmelder- und/oder Löschsteuerzentrale. An das Gehäuse 10 angeordnet sind Kühlrippen 18 gezeigt. Das Gehäuse 10 ist starr ausgeführt, um den Lichtleitstab 20 zu stabilisieren.

Fig. 5 zeigt schematisch und exemplarisch einen Teil des Gehäuses 10 einer Lichtleitanordnung 1, nämlich den Teil der Aufnahme 15. In der besonderen Ausgestaltung der Fig. 5 weist die Aufnahme 15 Kulissenführungen 19 zur Befestigung eines Sensorkopfes 100 auf, der korrespondierende Kopplungsmittel aufweist. Natürlich sind auch andere Arten der Fixierung möglich.

Alternativ zu der Ausführung der Aufnahme 15 als Aufnahme, also als Buchse, kann die Aufnahme 15 auch als Stecker ausgeführt sein und die korrespondierende Aufnahme auf Seite des Sensorkopfes 100 ausgeführt sein. Entsprechend kann auch der Sensorkopf 100 die geeigneten Kopplungsmittel, beispielsweise Kulissenführungen aufweisen.

Fig. 6 zeigt schematisch und exemplarisch ein erfindungsgemäßes Brandschutzsystem 5. Das Brandschutzsystem 5 weist in diesem Beispiel eine als Brandmelder- und/oder Löschsteuerzentrale ausgebildete Auswerteeinheit 4 auf, die mit mehreren Funken- und/oder Flammenmeldern 2 über Anschlussleitungen 70 verbunden ist. Die Auswerteeinheit 4 ist insbesondere die zentrale Steuereinheit des Brandschutzsystems 5. Als weiteres Beispiel ist eine separate Auswerteeinheit 4' gezeigt, die zwischen dem Funken- und/oder Flammenmelder 2 und der Brandmelder- und/oder Löschsteuerzentrale angeordnet ist und die Detektionssignale des Funken- und/oder Flammenmelders 2 auswertet und weiterleitet.

In einem Überwachungsbereich 6, der beispielsweise das Innere eines Materialtrockners ist, liegt die Lichteintrittsöffnung von, in diesem Beispiel, zwei Funken- und/oder Flammenmeldern 2. Ferner ist eine löschmittelausbringende Einrichtung und/oder eine Schutzeinrichtung 9, beispielsweise Löschdüse oder andere Einrichtung, gezeigt. Bei der Ausgestaltung als löschmittelausbringende Einrichtung ist sie dazu ausgebildet, bei entsprechender Ansteuerung Löschmittel in den Überwachungsbereich 6 auszubringen. Beispiele für Schutzvorrichtungen sind Materialausbringungsklappen oder Stromabschaltungsvorrichtungen. Eine löschmittelausbringende Einrichtung kann beliebig und wie einem Fachmann bekannt ausgestaltet sein und beispielsweise Löschmittelvorratsbehälter, Auslöseeinrichtung, Rohrleitungssystem und/oder Löschdüse umfassen.

Fig. 7 zeigt schematisch und exemplarisch ein Flussdiagramm eines Verfahrens 200 zur thermischen Entkopplung mindestens eines Sensors 50, 60 eines Funken- und/oder Flammendetektors 2 vom Erfassungsort der für Funken oder Flammen charakteristischen elektromagnetischen Strahlung.

In einem Schritt 210 wird eine Lichtleitanordnung 1 zur Übertragung von elektromagnetischer Strahlung, insbesondere von Ultraviolett- und/oder Infrarotstrahlung, bereitgestellt. Die Lichtleitanordnung 1 weist ein Gehäuse 10 und einen Lichtleitstab 20 auf. Das Gehäuse 10 weist eine Lichteintrittsöffnung 12 und eine gegenüberliegende Lichtaustrittsöffnung 14 auf. Der Lichtleitstab 20 ist in dem Gehäuse 10 zwischen der Lichteintrittsöffnung 12 und der Lichtaustrittsöffnung 14 angeordnet.

In einem Schritt 220 wird elektromagnetischer Strahlung mittels des Lichtleitstabes 20 von der Lichteintrittsöffnung 12 zu der Lichtaustrittsöffnung 14 geleitet.

In einem Schritt 230 wird die elektromagnetische Strahlung durch den mindestens einen Sensor 50, 60 nach Austritt der elektromagnetischen Strahlung aus der Lichtaustrittsöffnung 14 detektiert.

Schließlich wird in einem optionalen Schritt 240 insbesondere mittels einer nicht gezeigten Lufteinleiteinrichtung die Luft in einem Luftspalt zwischen Lichtleitstab 20 und Gehäuse 10 beeinflusst.

### Liste der Bezugszeichen

- 1: Lichtleitanordnung
- 2: Funken- und/oder Flammendetektor
- 4: zentrale Steuereinheit
- 4': Auswerteeinheit
- 5: Brandschutzsystem
- 6: Überwachungsbereich
- 9: löschmittelausbringende Einrichtung und/oder Schutzvorrichtung

- 10: Gehäuse
- 12: Lichteintrittsöffnung
- 14: Lichtaustrittsöffnung
- 15: Aufnahme
- 16: Gewinde
- 18: Kühlelemente
- 19: Kulissenführungen
- 20: Lichtleitstab

- 32: Federelement
- 34: Federelement
- 36: Federelement
- 38: Toleranzring

- 40: Schutzoptik
- 42: Fensterelement
- 44: Fixierungselement
- 50: erster Sensor
- 60: zweiter Sensor
- 62: Sensorelement

- 70: Anschlusskabel
- 100: Sensorkopf
- 110: Gehäuse
- 115: Einführbereich
- 120: Elektronik

- 200: Verfahren
- 210: Schritt des Bereitstellens
- 220: Schritt des Leitens
- 230: Schritt des Detektierens
- 240: Schritt des Beeinflussens

## Patentansprüche

1. Lichtleitanordnung (1) zur Übertragung von elektromagnetischer Strahlung, insbesondere von Ultraviolett- und/oder Infrarotstrahlung, wobei die Lichtleitanordnung (1) ein Gehäuse (10) und einen Lichtleitstab (20) aufweist,
wobei das Gehäuse (10) eine Lichteintrittsöffnung (12) und eine gegenüberliegende Lichtaustrittsöffnung (14) aufweist,
wobei der Lichtleitstab (20) in dem Gehäuse (10) zwischen der Lichteintrittsöffnung (12) und der Lichtaustrittsöffnung (14) angeordnet ist,
wobei der Lichtleitstab (20) auf wenigstens einer Seite in dem Gehäuse (10) federnd gelagert ist, um unterschiedliche thermische Ausdehnungen zwischen dem Lichtleitstab (20) und dem Gehäuse sowie Stöße des Lichtleitstabs aufzunehmen,
wobei die Lichtleitanordnung (1) ein erstes, zweites und drittes Federelement (32, 34, 36) aufweist, wobei das erste Federelement (32) im Bereich der Lichteintrittsöffnung (12) angeordnet ist, wobei das zweite Federelement (34) in einer Nut aufgenommen ist, um eine federnde Lagerung des Lichtleitstabs (20) in radialer Richtung zu ermöglichen, und wobei das dritte Federelement (36) auf der Seite der Lichtaustrittsöffnung (14) angeordnet ist und den Lichtleitstab (20) in axialer Richtung federnd lagert,
wobei die Lichtleitanordnung (1) einen Luftspalt, insbesondere einen den Lichtleitstab (20) radial umlaufenden Luftspalt, zwischen Lichtleitstab (20) und Gehäuse (10) aufweist und wobei
die Lichtleitanordnung (1) ferner eine Lufteinleiteinrichtung aufweist, die dazu eingerichtet ist, Luft, insbesondere Druckluft, in den Luftspalt zwischen Lichtleitstab (20) und Gehäuse (10) einzuleiten.

2. Lichtleitanordnung (1) nach Anspruch 1, wobei die federnde Lagerung als Lagerung in Axialrichtung des Lichtleitstabes (20) auf der der Lichteintrittsöffnung (12) gegenüberliegenden Seite ausgebildet ist.

3. Lichtleitanordnung (1) nach einem der vorstehenden Ansprüche, wobei der Luftspalt zwischen 0,2 mm und 5 mm beträgt.

4. Lichtleitanordnung (1) nach einem der vorstehenden Ansprüche, die ferner eine vor dem Lichtleitstab (20) an der Lichteintrittsöffnung (12) angeordnete Schutzoptik (40) aufweist, wobei das Gehäuse (10) im Bereich der Lichteintrittsöffnung (12) vorzugsweise ein Gewinde (16) aufweist und die Schutzoptik (40) zum Aufschrauben auf das Gehäuse (10) ausgebildet ist.

5. Lichtleitanordnung (1) nach einem der vorstehenden Ansprüche, wobei im Bereich der Lichteintrittsöffnung (12) ein Fixierungselement für eine Schutzoptik (40), insbesondere eine Bördelung (44), ausgebildet ist und/oder die Lichtleitanordnung (1) eine elastische Lagerung in Radialrichtung um den Lichtleitstab (20) aufweist.

6. Lichtleitanordnung (1) nach einer Kombination der Ansprüche 4 und 5, wobei ein Toleranzring (38) zwischen Schutzoptik (40) und Gehäuse (10) bzw. Lichtleitstab (20) frei gelagert ist.

7. Lichtleitanordnung (1) nach einem der vorstehenden Ansprüche, wobei das Gehäuse (10) auf seiner Außenseite in Axialrichtung Kühlelemente, insbesondere Kühlrippen, aufweist.

8. Lichtleitanordnung (1) nach einem der vorstehenden Ansprüche, wobei der Lichtleitstab (20) Saphir aufweist bzw. daraus besteht und/oder das Gehäuse (10) Edelstahl aufweist bzw. daraus besteht.

9. Lichtleitanordnung (1) nach einem der vorstehenden Ansprüche, wobei im Bereich der Lichtaustrittsöffnung (14) eine Aufnahme (15) zur Aufnahme eines Sensorkopfes (100), insbesondere eines Sensorkopfes (100) eines Flammen- und/oder Funkendetektors (4), ausgebildet ist.

10. Lichtleitanordnung (1) nach einem der vorstehenden Ansprüche, wobei die Lichtleitanordnung (1) zur Kopplung von optischer Strahlung und Elektronik bzw. Sensorik und vorzugsweise zum Einsatz in Bereichen mit hohen Temperaturen bis 450°C ausgebildet ist.

11. Lichtleitanordnung (1) nach einem der vorstehenden Ansprüche, wobei die Lichtleitanordnung (1) zur Leitung von Licht im Wellenlängenbereich von 0,2 bis 6 Mikrometer, insbesondere von etwa 2,4 Mikrometer, und bevorzugt zur Detektion von Funken und/oder Flammen, ausgebildet ist.

12. Funken- und/oder Flammendetektor (2), insbesondere zum Einsatz mit Brandmelder- und/oder Löschsteuerzentralen, mit einer Lichtleitanordnung (1) nach einem der vorstehenden Ansprüche und einem Sensorkopf (100), wobei der Sensorkopf (100) dazu eingerichtet ist, mit der Lichtaustrittsöffnung der Lichtleitanordnung (1) gekoppelt zu werden.

13. Brandschutzsystem (5) zur Detektion von Funken und/oder Flammen mit
• einem Funken- oder Flammendetektor (2) nach Anspruch 12,
• einer Auswerteeinheit (4, 4'), insbesondere einer Brandmelder- und/oder Löschsteuerzentrale und optional eine löschmittelausbringende Einheit und/oder eine Schutzvorrichtung (9), wobei diese löschmittelausbringende Einrichtung durch die Auswerteeinheit (4') und/oder eine zentrale Steuereinheit (4) angesteuert wird.

14. Verfahren (200) zur thermischen Entkopplung mindestens eines Sensors eines Funken- und/oder Flammendetektors vom Erfassungsort der für Funken oder Flammen charakteristischen elektromagnetischen Strahlung mit den Schritten:
- Bereitstellen (210) einer Lichtleitanordnung (1) zur Übertragung von elektromagnetischer Strahlung, insbesondere von Ultraviolett- und/oder Infrarotstrahlung, wobei die Lichtleitanordnung (1) ein Gehäuse (10) und einen Lichtleitstab (20) aufweist, wobei das Gehäuse (10) eine Lichteintrittsöffnung (12) und eine gegenüberliegende Lichtaustrittsöffnung (14) aufweist, wobei der Lichtleitstab (20) in dem Gehäuse (10) zwischen der Lichteintrittsöffnung (12) und der Lichtaustrittsöffnung (14) angeordnet ist, wobei die Lichtleitanordnung (1) einen Luftspalt, insbesondere einen den Lichtleitstab (20) radial umlaufenden Luftspalt, zwischen Lichtleitstab (20) und Gehäuse (10) aufweist und wobei die Lichtleitanordnung (1) ferner eine Lufteinleiteinrichtung aufweist, die dazu eingerichtet ist, Luft, insbesondere Druckluft, in den Luftspalt zwischen Lichtleitstab (20) und Gehäuse (10) einzuleiten,
wobei die Lichtleitanordnung (1) ein erstes, zweites und drittes Federelement (32, 34, 36) aufweist, wobei das erste Federelement (32) im Bereich der Lichteintrittsöffnung (12) angeordnet ist, wobei das zweite Federelement (34) in einer Nut aufgenommen ist, um eine federnde Lagerung des Lichtleitstabs (20) in radialer Richtung zu ermöglichen, und wobei das dritte Federelement (36) auf der Seite der Lichtaustrittsöffnung 14 angeordnet ist und den Lichtleitstab (20) in axialer Richtung federnd lagert,
- Leiten (220) von elektromagnetischer Strahlung mittels des Lichtleitstabes (20) von der Lichteintrittsöffnung (12) zu der Lichtaustrittsöffnung (14),
- Detektieren (230) der elektromagnetischen Strahlung durch den mindestens einen Sensor (50, 60) nach Austritt der elektromagnetischen Strahlung aus der Lichtaustrittsöffnung (14).

15. Verfahren (200) nach Anspruch 14, wobei zwischen Lichtleitstab (20) und Gehäuse (10), insbesondere in Axialrichtung des Lichtleitstabs (20), ein Luftspalt ausgebildet ist, wobei der Luftspalt vorzugsweise zwischen 0,2 mm und 5 mm beträgt, wobei das Verfahren den nachfolgenden Schritt aufweist:
- Beeinflussen (240), insbesondere mittels einer Lufteinleiteinrichtung, der Luft in dem Luftspalt.

## Claims

1. A light guiding arrangement (1) for transmitting electromagnetic radiation, in particular ultraviolet and/or infrared radiation, wherein the light guiding arrangement (1) comprises a housing (10) and a light guiding rod (20),
wherein the housing (10) comprises a light entrance opening (12) and a light exit opening (14) located opposite the light entrance opening (12),
wherein the light guiding rod (20) is arranged in the housing (10) between the light entrance opening (12) and the light exit opening (14),
wherein the light guiding rod (20) is elastically mounted on at least one side in the housing (10) to compensate for different thermal expansions between the light guiding rod (20) and the housing as well as impacts on the light guiding rod,
wherein the light guiding arrangement (1) comprises a first, second, and third spring element (32, 34, 36),
wherein the first spring element (32) is arranged in the region of the light entrance opening (12),
wherein the second spring element (34) is received in a groove to enable an elastic mounting of the light guiding rod (20) in the radial direction, and
wherein the third spring element (36) is arranged on the side of the light exit opening (14) and elastically mounts the light guiding rod (20) in the axial direction,
wherein the light guiding arrangement (1) comprises an air gap, in particular an air gap that radially surrounds the light guiding rod (20), between the light guiding rod (20) and the housing (10), and
wherein the light guiding arrangement (1) further comprises an air inlet device that is configured to introduce air, in particular compressed air, into the air gap between the light guiding rod (20) and the housing (10).

2. The light guiding arrangement (1) according to claim 1, wherein the elastic mounting is formed as a mounting in the axial direction of the light guiding rod (20) on the side opposite the light entrance opening (12).

3. The light guiding arrangement (1) according to any one of the preceding claims, wherein the air gap is between 0.2 mm and 5 mm.

4. The light guiding arrangement (1) according to any one of the preceding claims, further comprising a protective optic (40) arranged in front of the light guiding rod (20) at the light entrance opening (12),
wherein the housing (10) preferably comprises a thread (16) in the region of the light entrance opening (12), and
wherein the protective optic (40) is configured to be screwed onto the housing (10).

5. The light guiding arrangement (1) according to any one of the preceding claims, wherein a fixing element for a protective optic (40), in particular a flange (44), is formed in the region of the light entrance opening (12), and/or the light guiding arrangement (1) comprises an elastic mounting in the radial direction around the light guiding rod (20).

6. The light guiding arrangement (1) according to a combination of claims 4 and 5, wherein a tolerance ring (38) is freely mounted between the protective optic (40) and the housing (10) and/or the light guiding rod (20).

7. The light guiding arrangement (1) according to any one of the preceding claims, wherein the housing (10) comprises cooling elements, in particular cooling fins, on its outside in the axial direction.

8. The light guiding arrangement (1) according to any one of the preceding claims, wherein the light guiding rod (20) comprises or consists of sapphire and/or the housing (10) comprises or consists of stainless steel.

9. The light guiding arrangement (1) according to any one of the preceding claims, wherein a receptacle (15) for receiving a sensor head (100), in particular a sensor head (100) of a flame and/or spark detector (4), is formed in the region of the light exit opening (14).

10. The light guiding arrangement (1) according to any one of the preceding claims, wherein the light guiding arrangement (1) is configured for coupling optical radiation and electronics or sensors and is preferably designed for use in environments with high temperatures up to 450°C.

11. The light guiding arrangement (1) according to any one of the preceding claims, wherein the light guiding arrangement (1) is configured for guiding light in the wavelength range of 0.2 to 6 µm, in particular of approximately 2.4 µm, and preferably for the detection of sparks and/or flames.

12. A spark and/or flame detector (2), in particular for use with fire alarm and/or extinguishing control centers, comprising a light guiding arrangement (1) according to any one of the preceding claims and a sensor head (100),
wherein the sensor head (100) is configured to be coupled to the light exit opening of the light guiding arrangement (1).

13. A fire protection system (5) for detecting sparks and/or flames, comprising
a spark or flame detector (2) according to claim 12,
an evaluation unit (4, 4'), in particular a fire alarm and/or extinguishing control center, and optionally a extinguishing agent dispensing unit and/or a protective device (9),
wherein said extinguishing agent dispensing unit is controlled by the evaluation unit (4') and/or a central control unit (4).

14. A method (200) for thermal decoupling of at least one sensor of a spark and/or flame detector from detection location of electromagnetic radiation characteristic of spark or flame, comprising the steps of:
providing (210) a light guiding arrangement (1) for transmitting electromagnetic radiation, in particular ultraviolet and/or infrared radiation,
wherein the light guiding arrangement (1) comprises a housing (10) and a light guiding rod (20),
wherein the housing (10) comprises a light entrance opening (12) and a light exit opening (14) located opposite the light entrance opening (12),
wherein the light guiding rod (20) is arranged in the housing (10) between the light entrance opening (12) and the light exit opening (14),
wherein the light guiding arrangement (1) comprises an air gap, in particular an air gap that radially surrounds the light guiding rod (20), between the light guiding rod (20) and the housing (10), and
wherein the light guiding arrangement (1) further comprises an air inlet device that is configured to introduce air, in particular compressed air, into the air gap between the light guiding rod (20) and the housing (10),
wherein the light guiding arrangement (1) comprises a first, second, and third spring element (32, 34, 36),
wherein the first spring element (32) is arranged in the region of the light entrance opening (12),
wherein the second spring element (34) is received in a groove to enable an elastic mounting of the light guiding rod (20) in the radial direction, and
wherein the third spring element (36) is arranged on the side of the light exit opening (14) and elastically mounts the light guiding rod (20) in the axial direction,
guiding (220) electromagnetic radiation by means of the light guiding rod (20) from the light entrance opening (12) to the light exit opening (14),
detecting (230) the electromagnetic radiation by the at least one sensor (50, 60) after the electromagnetic radiation has exited the light exit opening (14).

15. The method (200) according to claim 14, wherein an air gap is formed between the light guiding rod (20) and the housing (10), in particular in the axial direction of the light guiding rod (20),
wherein the air gap preferably has a width between 0.2 mm and 5 mm,
wherein the method comprises the following step:
influencing (240) the air in the air gap, in particular by means of an air inlet device.

## Revendications

1. Ensemble de guidage de lumière (1) pour la transmission d'un rayonnement électromagnétique, en particulier d'un rayonnement ultraviolet et/ou infrarouge, dans lequel l'ensemble de guidage de lumière (1) présente un boîtier (10) et une tige de guidage de lumière (20),
dans lequel le boîtier (10) présente une ouverture d'entrée de lumière (12) et une ouverture de sortie de lumière (14) située en face,
dans lequel la tige de guidage de lumière (20) est disposée dans le boîtier (10) entre l'ouverture d'entrée de lumière (12) et l'ouverture de sortie de lumière (14),
dans lequel la tige de guidage de lumière (20) est montée sur ressort sur au moins un côté dans le boîtier (10) pour absorber différentes dilatations thermiques entre la tige de guidage de lumière (20) et le boîtier ainsi que des chocs de la tige de guidage de lumière,
dans lequel l'ensemble de guidage de lumière (1) présente un premier, un deuxième et un troisième élément à ressort (32, 34, 36), dans lequel le premier élément à ressort (32) est disposé dans la zone de l'ouverture d'entrée de lumière (12), dans lequel le deuxième élément à ressort (34) est logé dans une rainure pour permettre un montage sur ressort de la tige de guidage de lumière (20) dans la direction radiale, et dans lequel le troisième élément à ressort (36) est disposé sur le côté de l'ouverture de sortie de lumière (14) et monte sur ressort la tige de guidage de lumière (20) dans la direction axiale,
dans lequel l'ensemble de guidage de lumière (1) présente un entrefer, en particulier un entrefer entourant radialement en périphérie la tige de guidage de lumière (20), entre la tige de guidage de lumière (20) et le boîtier (10) et dans lequel
l'ensemble de guidage de lumière (1) présente en outre un dispositif d'introduction d'air qui est mis au point pour introduire de l'air, en particulier de l'air comprimé, dans l'entrefer entre la tige de guidage de lumière (20) et le boîtier (10).

2. Ensemble de guidage de lumière (1) selon la revendication 1, dans lequel le montage sur ressort est réalisé comme un palier dans la direction axiale de la tige de guidage de lumière (20) sur le côté opposé à l'ouverture d'entrée de lumière (12).

3. Ensemble (1) de guidage de lumière selon l'une quelconque des revendications précédentes, dans lequel l'entrefer est compris entre 0,2 mm et 5 mm.

4. Ensemble de guidage de lumière (1) selon l'une quelconque des revendications précédentes, qui présente en outre une optique de protection (40) disposée devant la tige de guidage de lumière (20) sur l'ouverture d'entrée de lumière (12), dans lequel le boîtier (10) présente de préférence un filetage (16) dans la zone de l'ouverture d'entrée de lumière (12) et l'optique de protection (40) est réalisée pour être vissée sur le boîtier (10).

5. Ensemble de guidage de lumière (1) selon l'une quelconque des revendications précédentes, dans lequel un élément de fixation pour une optique de protection (40), en particulier un sertissage (44), est réalisé dans la zone de l'ouverture d'entrée de lumière (12) et/ou l'ensemble de guidage de lumière (1) présente un palier élastique dans la direction radiale autour de la tige de guidage de lumière (20).

6. Ensemble de guidage de la lumière (1) selon une combinaison des revendications 4 et 5, dans lequel une bague de tolérance (38) est librement montée entre l'optique de protection (40) et le boîtier (10) ou la tige de guidage de la lumière (20).

7. Ensemble de guidage de lumière (1) selon l'une quelconque des revendications précédentes, dans lequel le boîtier (10) présente sur son côté extérieur, dans la direction axiale, des éléments de refroidissement, en particulier des nervures de refroidissement.

8. Ensemble de guidage de lumière (1) selon l'une quelconque des revendications précédentes, dans lequel la tige de guidage de lumière (20) présente du saphir et/ou en est constituée et/ou le boîtier (10) présente de l'acier inoxydable et/ou en est constitué.

9. Ensemble de guidage de lumière (1) selon l'une quelconque des revendications précédentes, dans lequel un logement (15) est réalisé dans la zone de l'ouverture de sortie de lumière (14) pour loger une tête de capteur (100), en particulier une tête de capteur (100) d'un détecteur de flammes et/ou d'étincelles (4).

10. Ensemble de guidage de lumière (1) selon l'une quelconque des revendications précédentes, dans lequel l'ensemble de guidage de lumière (1) est réalisé pour le couplage d'un rayonnement optique et un mécanisme électronique ou un mécanisme de détection est réalisé de préférence pour une utilisation dans des zones à températures élevées jusqu'à 450 °C.

11. Ensemble de guidage de lumière (1) selon l'une quelconque des revendications précédentes, dans lequel l'ensemble de guidage de lumière (1) est réalisé pour guider de la lumière dans la plage de longueurs d'onde de 0,2 à 6 micromètres, en particulier d'environ 2,4 micromètres, et de préférence pour détecter des étincelles et/ou des flammes.

12. Détecteur d'étincelles et/ou de flammes (2), en particulier pour une utilisation avec des centrales de détection d'incendie et/ou de commande d'extinction, avec un ensemble de guidage de lumière (1) selon l'une quelconque des revendications précédentes et une tête de capteur (100), dans lequel la tête de capteur (100) est mise au point pour être couplée à l'ouverture de sortie de lumière de l'ensemble de guidage de lumière (1).

13. Système de protection contre l'incendie (5) pour la détection d'étincelles et/ou de flammes avec
• un détecteur d'étincelles ou de flammes (2) selon la revendication 12,
• une unité d'évaluation (4, 4'), en particulier une centrale de détection d'incendie et/ou de commande d'extinction et en option une unité de distribution d'agent extincteur et/ou un dispositif de protection (9), dans lequel ledit dispositif de distribution d'agent extincteur est piloté par l'unité d'évaluation (4') et/ou une unité de commande centrale (4).

14. Procédé (200) de découplage thermique d'au moins un capteur d'un détecteur d'étincelles et/ou de flammes du lieu de détection du rayonnement électromagnétique caractéristique des étincelles ou des flammes, comprenant les étapes :
- de mise à disposition (210) d'un ensemble de guidage de lumière (1) pour la transmission d'un rayonnement électromagnétique, en particulier d'un rayonnement ultraviolet et/ou infrarouge, dans lequel l'ensemble de guidage de lumière (1) présente un boîtier (10) et une tige de guidage de lumière (20), dans lequel le boîtier (10) présente une ouverture d'entrée de lumière (12) et une ouverture de sortie de lumière (14) opposée, dans lequel la tige de guidage de lumière (20) est disposée dans le boîtier (10) entre l'ouverture d'entrée de lumière (12) et l'ouverture de sortie de lumière (14), dans lequel l'ensemble de guidage de lumière (1) présente un entrefer, en particulier un entrefer entourant radialement en périphérie la tige de guidage de lumière (20), entre la tige de guidage de lumière (20) et le boîtier (10) et dans lequel l'ensemble de guidage de lumière (1) présente en outre un dispositif d'introduction d'air qui est mis au point pour introduire de l'air, en particulier de l'air comprimé, dans l'entrefer entre la tige de guidage de lumière (20) et le boîtier (10),
dans lequel l'ensemble de guidage de lumière (1) présente un premier, un deuxième et un troisième élément à ressort (32, 34, 36), dans lequel le premier élément à ressort (32) est disposé dans la zone de l'ouverture d'entrée de lumière (12), dans lequel le deuxième élément à ressort (34) est logé dans une rainure pour permettre un montage sur ressort de la tige de guidage de lumière (20) dans la direction radiale, et dans lequel le troisième élément à ressort (36) est disposé sur le côté de l'ouverture de sortie de lumière (14) et monte sur ressort la tige de guidage de lumière (20) dans la direction axiale,
- de guidage (220) d'un rayonnement électromagnétique à l'aide de la tige de lumière (20) depuis l'ouverture d'entrée de lumière (12) à l'ouverture de sortie de lumière (14),
- de détection (230) du rayonnement électromagnétique par l'au moins un capteur (50, 60) après la sortie du rayonnement électromagnétique de l'ouverture de sortie de lumière (14).

15. Procédé (200) selon la revendication 14, dans lequel un entrefer est réalisé entre la tige de guidage de lumière (20) et le boîtier (10), en particulier dans la direction axiale de la tige de guidage de lumière (20), dans lequel l'entrefer est compris de préférence entre 0,2 mm et 5 mm, dans lequel le procédé présente l'étape suivante :
- l'incidence (240), en particulier au moyen d'un dispositif d'introduction d'air, de l'air dans l'entrefer.
